# FASCICULE DE BREVET EUROPEEN

(11) **EP 3 492 039 B1**
(45) Date de publication et mention de la délivrance du brevet: **23.12.2020**
(21) Numéro de dépôt: 17795657.0
(22) Date de dépôt: 11.05.2017
(51) Int. Cl.: A61C 8/00

(54) **IMPLANT DENTAIRE DOUBLE STABLE FACE À LA PÉRI-IMPLANTITE**
DOPPELTES ZAHNIMPLANTAT MIT BEWAHRUNG DER STABILITÄT BEI PERIIMPLANTITIS
DOUBLE DENTAL IMPLANT THAT REMAINS STABLE IN THE PRESENCE OF PERIIMPLANTITIS

(30) Priorité: 29.07.2016 ES 201600625
(43) Date de publication de la demande: 05.06.2019
(73) Titulaire: Castro Rojas, Fernando, 47001 Vallalord (ES)
(72) Inventeur: CASTRO GARCÍA DE LA BARGA, Fernando, 47001 Vallalord (ES); CASTRO ROJAS, Fernando, 47001 Vallalord (ES)
(74) Mandataire: LLR
(86) Numéro de dépôt international: PCT/ES2017/000053
(87) Numéro de publication internationale: WO 2017/194798

(56) Documents cités:
- WO-A1-2005/023137
- WO-A1-2006/107292
- WO-A1-2014/177742
- ES-T3- 2 126 058
- US-A- 5 195 891
- US-A1- 2010 003 639
- US-A1- 2010 114 314
- US-A1- 2012 214 128

## Description

La présente invention se rapporte à un implant dentaire à double implant (supérieur / inférieur) qui a la caractéristique d'être stable en cas de péri-implantite (*peri-implantitis*), évitant ainsi un traitement et / ou les conséquences de la perte de l'implant, et également utile en cas de complications, ayant un caractère esthétique et prothétique.

Actuellement, les techniques implantaires sont largement utilisées pour remplacer les dents manquantes par des implants, l'implant ayant la même fonction qu'une racine dentaire. Sur l'implant se monte la prothèse dentaire correspondante.

Cette technique de réhabilitation dentaire se résume de manière générale en deux phases :
- une phase initiale de chirurgie, dans laquelle les implants qui seront les fixations pour les prothèses ou les pièces dentaires qui doivent être remplacées sont mis en place ;
- une deuxième phase, dans laquelle on prend les mesures de la bouche du patient pour confectionner la prothèse et placer cette dernière ensuite sur les implants. Le but est de chercher à restituer les fonctions des pièces perdues (mastication, esthétique, ...).

L'un des facteurs qui influencent le plus sur le succès de l'implant est l'équilibre entre les micro-organismes présents dans la bouche et les défenses du patient. Cet équilibre, lorsqu'il est perturbé, peut entraîner une parodontite au niveau des pièces dentaires, avec une perte de l'os autour de la racine et une péri-implantite au niveau des implants, avec une perte d'os autour de l'implant.

Le traitement de la péri-implantite est de nos jours un problème ayant des résultats imprévisibles.

Ceci est principalement dû à la difficulté d'accès à la zone contaminée de l'implant, à ses recoins, à la surface de l'implant a été prétraité pour présenter une microrugosité afin de favoriser l'ostéointégration de l'implant dans l'os, mais qui est difficile à nettoyer, décontaminer et polir parce que contaminée par des micro-organismes et leurs détritus.

Les traitements sont donc nombreux et variés, mais de peu de succès, aboutissant dans de nombreux cas à la perte de l'implant.

La présente invention a pour but de fournir un implant idéal pour ces cas de péri-implantite dans lesquels la perte osseuse autour de l'implant ne concerne que l'implant supérieur, le deuxième implant (inférieur) pouvant rester en place, avec les mêmes caractéristiques que le double implant, mais en étant plus court.

Dans cette situation, on enlève la partie contaminée (l'implant supérieur), laissant un autre implant (l'implant inférieur) dans la même position et la même liaison, sans la nécessité d'une nouvelle intervention chirurgicale pour mettre en place un nouvel implant, lequel est souvent accompagné d'une greffe osseuse, avec nouvelle prothèse postérieure, après le temps d'attente nécessaire pour l'intégration de cet implant.

Un autre avantage est qu'en plus de laisser l'implant inférieur en place, qui reste ancré dans l'os, il y a la possibilité de laisser la prothèse au patient, si l'on remplace l'implant supérieur par le pilier trans-épithélial de la même hauteur et liaison que l'implant qui a été supprimé.

À ceci, il y a lieu d'ajouter le fait que le pilier trans-épithélial a une surface lisse et polie, ce qui est ce qui est recherché dans les traitements de la péri-implantite.

Une autre complication que l'invention est à même de résoudre est de nature esthétique, situation qui peut être rencontrée lorsqu'un implant a des spires de titane visibles ou transparentes à travers la gencive. On pourrait envisager de remplacer l'implant supérieur par un pilier trans-épithélial avec un placage en porcelaine blanche ou rose.

Dans le cas de complications prothétiques, il existe des situations dans lesquelles la vis qui maintient la prothèse se rompt et ne peut pas être récupérée, aboutissant à un implant inutilisable ; ceci est résolu selon l'invention en enlevant l'implant supérieur avec la vis cassée et en mettant en place, soit un autre nouvel implant supérieur, soit un autre pilier trans-épithélial à la dimension de l'implant supérieur.

Un autre avantage de l'implant double est la possibilité de le reconnaître sur une radiographie par la visualisation d'une deuxième portion circulaire polie sur le corps de l'implant.

L'application industrielle de cette invention relève du domaine de la chirurgie dentaire et plus particulièrement des implants dentaires.

### ARRIÈRE-PLAN DE L'INVENTION

Bien qu'aucune invention identique à celle présentement décrite n'ait été trouvée, nous exposons ci-dessous les documents relevés qui reflètent l'état de la technique s'y rapportant.

Ainsi, le document ES 2281995 A1 fait référence à des améliorations apportées à des implants dentaires, en particulier en ce qui concerne la distribution des types de surfaces en contact avec l'os pour l'ostéointégration (revêtement d'hydroxyapatite ou avec un fini rugueux), dans des implants cylindriques à base de titane ou d'alliages titane, présentant une surface polie ou un col (2) émergeant du maxillaire et qui occupe l'ordre de 1,5 à 2 mm, dans lequel la partie prothétique de l'implant est inséré ; la zone restante a sa surface traitée pour obtenir la finition de surface souhaitée, le traitement de surface consistant à réaliser dans une première phase un revêtement d'hydroxyapatite (4) en laissant non revêtue une portion circulaire ou une zone (8) de l'implant de l'ordre de 4 ± 2 mm au-dessous du col poli (2), qui est ensuite soumis à un traitement (3) conférant une rugosité, par immersion, de manière classique, dans des acides et par sablage au moyen de différentes substances. À aucun moment n'est mentionnée la solution à double implant proposée par la présente invention.

Le document ES 1025017 U propose un implant dentaire comprenant un corps cylindrique en titane défini par : une zone supérieure de plus grand diamètre ; une zone intermédiaire et une zone apicale inférieure ; la zone supérieure, appelée coronale, est divisée en trois portions, l'une filetée, une autre qui définit une rainure périmétrique et celle à l'extrémité, qui est tronconique ; la zone intermédiaire est constituée par une partie filetée externe et par une autre partie de plus petit diamètre avec des cavités qui sont occupées par de l'os nouvellement formé ; la zone apicale inférieure est conique ou pyramidale avec des évidements régulièrement agencés qui sont complémentaires pour assurer la stabilité anti-rotation de l'implant ; et entre la partie d'extrémité filetée et la partie de diamètre plus petit de la région intermédiaire sont aménagés des trous forés inclinés en communication avec le fond d'un trou borgne axial qui présente une partie intérieure filetée située dans le prolongement d'un élargissement du trou de la zone supérieure dans lequel s'engage la dent émergente. Comme dans le cas précédent, la solution d'un implant réalisé en deux implants, un supérieur et un inférieur, n'est pas mentionnée.

Le document ES 2363046 T3 décrit un implant ayant des effets anti-inflammatoires ou antibactériens, ou les deux, adapté pour une implantation dans le corps du corps humain ou animal, l'implant comprenant un ensemble de grains ou de granulés poreux, les grains ou granules poreux comprenant du titane, un ou plusieurs oxydes de titane ou des alliages de titane et possèdent une couche d'oxyde de tyrane sur leurs surfaces ; ils ont une longueur moyenne d'un côté au côté opposé, en passant par un centre géométrique, de 200 microns à 5 mm ; ils ont une surface spécifique moyenne d'au moins 0,15 m² / g selon la méthode BET. La solution en tant qu'implant ne comprend pas, ici non plus, deux parties comme selon la présente invention.

De même, le document ES 2555827 A1 se réfère à une procédure pour l'application d'une protection antibactérienne dans un implant dentaire ; ledit implant comprenant au moins une surface externe formée de titane ou d'un alliage de titane ; il est caractérisé en ce qu'il comprend : a) une préparation préliminaire de la surface externe de l'implant, comprenant au moins une des opérations suivantes : meulage, polissage, nettoyage, décontamination et / ou enlèvement d'une couche d'oxyde de titane de ladite surface extérieure de l'implant, et b) le dépôt de particules d'argent sur une surface extérieure de l'implant, de titane ou d'alliage de titane, au moyen d'un procédé d'anodisation électrochimique puisée. Encore une fois, cet implant n'est pas basé sur la division de l'implant en deux implants qui se chevauchent comme proposé par la présente invention.

Le document ES 2432416 T3 propose un implant dentaire pour la fixation de prothèses dentaires, comportant un revêtement (6) de nitrure de zirconium (ZrN) avec une épaisseur de couche de 1 à 10 um. Il ne mentionne pas non plus l'application d'un double implant.

Le document ES 2392582 T3 décrit un implant dentaire cylindrique à base d'alliages de titane ou de titane, ayant une surface polie ou un col émergeant de la partie implantée et occupant une surface d'environ 1,5 à 2 mm, dans lequel le col de la fausse dent de l'implant est adapté pour être inséré, et la zone restante a une surface traitée ; l'implant comprend un revêtement d'hydroxyapatite laissant libre une portion circulaire ou une zone de l'implant de l'ordre de 4 + 2 mm dans le prolongement du col lisse, ladite portion circulaire ou zone ayant une surface rugueuse obtenue par un traitement de soumission à des acides et à un sablage. La solution proposée ne comprend pas d'implant divisé en deux implants se chevauchant comme proposé par la présente invention.

Le document WO 2006/107292 A1 décrit un implant dentaire formé par un implant supérieur et un implant inférieur.

Conclusions : Comme on peut le voir, d'après les recherches effectuées, aucun des documents trouvés ne résout les problèmes soulevés comme le fait l'invention proposée.

### DESCRIPTION DE L'INVENTION

L'invention concerne un implant dentaire double selon la revendication 1. Le double implant dentaire stable contre la péri-implantite objet de la présente invention est constitué par un implant formé par deux implants : un implant supérieur et un implant inférieur, l'implant supérieur pouvant être retiré.

Le double implant diffère extérieurement de l'implant classique par le fait d'avoir une deuxième portion circulaire polie dans le corps de l'implant, ce qui correspond au commencement de l'implant inférieur.

La liaison entre les deux implants se fait au moyen d'une tige filetée située dans la partie inférieure de l'implant supérieur et qui forme corps avec celui-ci, venant en engagement avec le filet que comprend l'implant inférieur.

La liaison entre les deux implants est circulaire, car elle doit permettre à l'implant de tourner dans le sens antihoraire lorsque ce dernier est retiré.

### BREVE DESCRIPTION DES DESSINS

Pour une meilleure compréhension de la présente description, des dessins sont joints, représentant un mode de réalisation préféré de la présente invention :

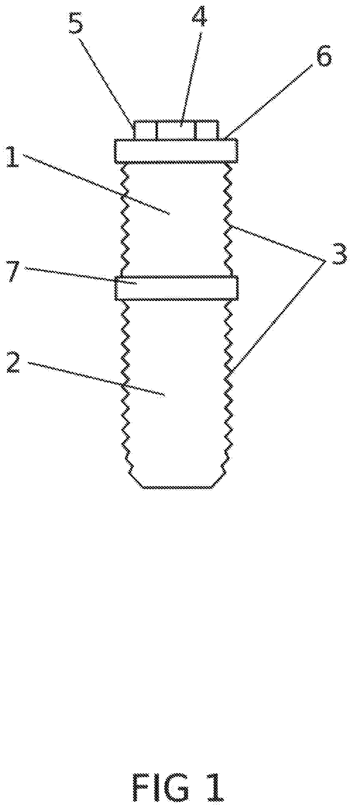

Figure 1 : Vue en élévation de l'implant double objet de l'invention ;

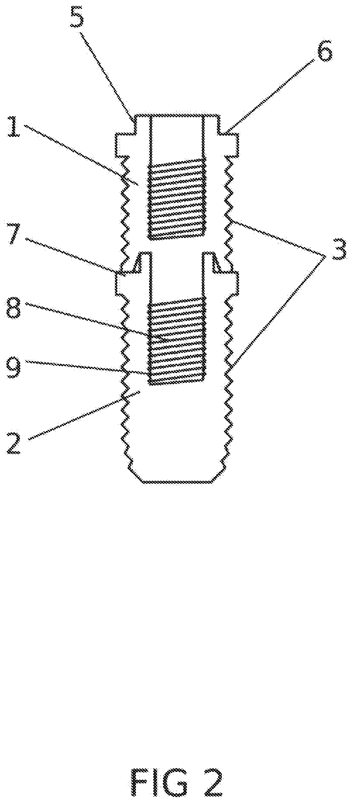

Figure 2 : Vue en coupe de l'élévation de l'implant double ;

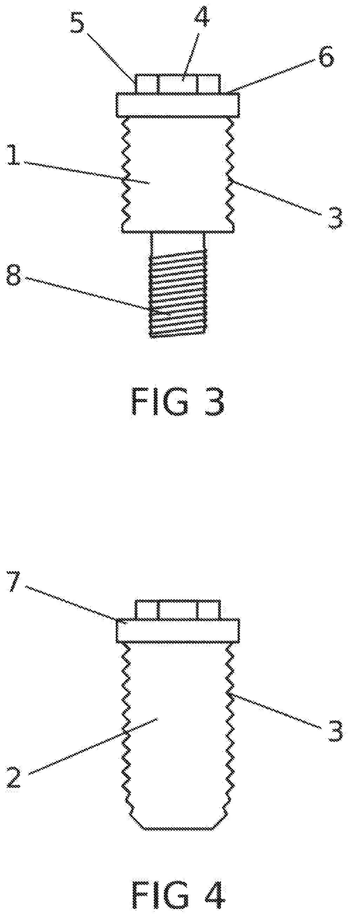

Figure 3 : Vue en élévation de l'implant supérieur ;
Figure 4 : Vue en élévation de l'implant inférieur.

Les références numériques qui apparaissent sur lesdites figures correspondent aux éléments constitutifs suivants de l'invention :
1. Implant supérieur
2. Implant inférieur
3. Broches auto-taraudeuses
4. Hexagone
5. Hauteur de l'hexagone
6. Plate-forme de liaison
7. Portion circulaire polie
8. Vis de liaison
9. Filet de liaison

### DESCRIPTION D'UN MODE DE REALISATION PREFERE

Un mode de réalisation préféré de l'implant à double dentaire stable à l'égard d'une péri-implantite objet de la présente invention, en se référant aux repères numériques, est basé sur un implant comprenant deux implants : un implant supérieur (1) et un implant inférieur (2), permettant de retirer l'implant supérieur (1).

En termes de morphologie et de liaison, il inclut les caractéristiques d'un implant classique : morphologie cylindrique, à spires auto-taraudeuses (3), avec une extrémité plus étroite, avec un hexagone externe (4) de liaison de 2,70 mm, un hexagone (5) de hauteur de 0,70 mm et une plateforme de liaison (6) de 4,10 mm. Le diamètre de l'implant (1, 2) est de 4,10 mm et la hauteur est de 11,5 mm.

Le double implant (1, 2) diffère extérieurement de l'implant classique par le fait de présenter une deuxième portion circulaire (7) polie dans le corps de l'implant (1, 2), qui correspond au commencement de l'implant inférieur (2).

La liaison entre les deux implants (1, 2) se fait au moyen d'une tige filetée (8) située dans la partie inférieure de l'implant supérieur (1) et formant corps avec celui-ci, venant en prise avec le filet (9) de l'implant inférieur (2).

La liaison entre les deux (1, 2) est circulaire, étant donné qu'elle doit permettre de tourner dans le sens inverse des aiguilles d'une montre lorsqu'elle est supprimée.

## Revendications

1. Implant dentaire double, stable à l'égard d'une péri-implantite, constitué par un implant formé par deux implants : un implant supérieur (1) et un implant inférieur (2), la liaison entre les deux implants (1, 2) étant réalisée au moyen d'une tige filetée (8) qui est située à la partie inférieure de l'implant supérieur (1) et qui forme corps avec celui-ci, venant en engagement avec un filet (9) que comprend l'implant inférieur (2), **caractérisé en ce que** l'implant double (1, 2) présente une portion circulaire (7) polie dans le corps d'implant (1, 2), qui correspond au commencement de l'implant inférieur (2).

2. Ensemble incluant l'implant dentaire double selon la revendication 1, **caractérisé en ce qu'**il comprend un pilier trans-épithélial de la même hauteur et liaison que l'implant supérieur (1).

3. Ensemble selon la revendication 2, **caractérisé en ce que** le pilier trans-épithélial a une surface lisse et polie.

4. Ensemble selon la revendication 2 ou la revendication 3, **caractérisé en ce que** le pilier trans-épithélial est un pilier trans-épithélial avec un placage en porcelaine blanche ou rose.

5. Implant selon la revendication 1, **caractérisé en ce que** la portion circulaire (7) fait saillie par rapport à une broche auto-taraudeuse (3) que forme le reste de l'implant inférieur (2).

6. Implant selon la revendication 1 ou la revendication 5, **caractérisé en ce que** les implants supérieur (1) et inférieur (2) se chevauchent, l'implant supérieur (1) présentant un rebord périphérique qui délimite une cavité à l'intérieur de lui, cette cavité recevant complètement une saillie proximale que forme l'implant inférieur (2) à son extrémité proximale.

7. Implant selon la revendication 6, **caractérisé en ce que** ladite saillie proximale présente, vue latéralement, une même forme qu'une saillie en hexagone (4) que forme l'implant supérieur (1) à son extrémité proximale.

8. Implant selon l'une des revendications 1, 5, 6 ou 7, **caractérisé en ce que** ledit implant supérieur (1) a une structure en broche à spires auto-taraudeuses (3).

## Patentansprüche

1. Doppeltes Zahnimplantat, das bei einer Periimplantitis stabil bleibt und von einem Implantat gebildet wird, das aus zwei Implantaten aufgebaut ist: einem oberen Implantat (1) und einem unteren Implantat (2), wobei die Verbindung zwischen den beiden Implantaten (1, 2) mit einer Gewindestange (8) hergestellt ist, die sich am unteren Teil des oberen Implantats (1) befindet, einteilig damit ausgebildet ist und mit einem Gewinde (9) in Eingriff gelangt, das das untere Implantat (2) umfasst, **dadurch gekennzeichnet, dass** das doppelte Implantat (1, 2) einen polierten kreisförmigen Abschnitt (7) im Körper des Implantats (1, 2) aufweist, der dem Anfang des unteren Implantats (2) entspricht.

2. Anordnung, die das doppelte Zahnimplantat nach Anspruch 1 beinhaltet, **dadurch gekennzeichnet, dass** sie einen transepithelialen Schaft mit derselben Höhe und Verbindung wie das obere Implantat (1) umfasst.

3. Anordnung nach Anspruch 2, **dadurch gekennzeichnet, dass** der transepitheliale Schaft eine glatte und polierte Oberfläche aufweist.

4. Anordnung nach Anspruch 2 oder Anspruch 3, **dadurch gekennzeichnet, dass** der transepitheliale Schaft ein transepithelialer Schaft mit einer Verblendung aus weißem oder rosafarbenem Porzellan ist.

5. Implantat nach Anspruch 1, **dadurch gekennzeichnet, dass** der kreisförmige Abschnitt (7) bezogen auf einen selbstschneidenden Stift (3) vorsteht, den das übrige untere Implantat (2) bildet.

6. Implantat nach Anspruch 1 oder Anspruch 5, **dadurch gekennzeichnet, dass** sich das obere (1) und untere Implantat (2) überdecken, wobei das obere Implantat (1) einen umlaufenden Rand aufweist, der einen Hohlraum darin begrenzt, wobei dieser Hohlraum einen proximalen Vorsprung vollständig aufnimmt, den das untere Implantat (2) an seinem proximalen Ende bildet.

7. Implantat nach Anspruch 6, **dadurch gekennzeichnet, dass** der proximale Vorsprung seitlich betrachtet dieselbe Form aufweist wie ein sechseckiger Vorsprung (4), den das obere Implantat (1) an seinem proximalen Ende bildet.

8. Implantat nach einem der Ansprüche 1, 5, 6 oder 7, **dadurch gekennzeichnet, dass** das obere Implantat (1) einen stiftartigen Aufbau mit selbstschneidenden Gewindegängen (3) aufweist.

## Claims

1. Double dental implant that remains stable in the presence of peri-implantitis, consisting of an implant formed by two implants: an upper implant (1) and a lower implant (2), the two implants (1, 2) being connected by a threaded rod (8) which is located in the lower part of the upper implant (1) of which it forms a part, engaging with a thread (9) of the lower implant (2), **characterised in that** the double implant (1, 2) has a polished circular portion (7) in the implant body (1, 2), which corresponds to the start of the lower implant (2).

2. Assembly including the double dental implant according to claim 1, **characterised in that** it comprises a transepithelial pillar of the same height and connection as the upper implant (1).

3. Assembly according to claim 2, **characterised in that** the surface of the transepithelial pillar is smooth and polished.

4. Assembly according to claim 2 or claim 3, **characterised in that** the transepithelial pillar is a transepithelial pillar with a white or pink porcelain veneer.

5. Implant according to claim 1, **characterised in that** the circular portion (7) projects relative to a self-tapping pin (3) formed by the rest of the lower implant (2).

6. Implant according to claim 1 or claim 5, **characterised in that** the upper (1) and lower (2) implants overlap, the upper implant (1) having a peripheral edge which defines a cavity inside it, this cavity completely receiving a proximal projection formed by the lower implant (2) at its proximal end.

7. Implant according to claim 6, **characterised in that** said proximal projection has, seen from the side, the same shape as a hexagonal projection (4) formed by the upper implant (1) at its proximal end.

8. Implant according to one of claims 1, 5, 6 or 7, **characterised in that** said upper implant (1) has the structure of a pin with a self-tapping thread (3).
